# EUROPÄISCHE PATENTSCHRIFT

(11) **EP 4 569 236 B1**
(45) Veröffentlichungstag und Bekanntmachung des Hinweises auf die Patenterteilung: **04.02.2026**
(21) Anmeldenummer: 23751942.6
(22) Anmeldetag: 03.08.2023
(51) Int. Cl.: F16B 12/20

(54) **VERBINDUNGSBESCHLAG SOWIE ZUGEHÖRIGE ANORDNUNG MIT ZWEI MITEINANDER VERBUNDENEN KOMPONENTEN**
CONNECTION FITTING AND ASSOCIATED ARRANGEMENT HAVING TWO INTERCONNECTED COMPONENTS
RACCORD DE RACCORDEMENT ET AGENCEMENT ASSOCIÉ COMPRENANT DEUX ÉLÉMENTS RELIÉS ENTRE EUX

(30) Priorität: 10.08.2022 DE 202022104548 U
(43) Veröffentlichungstag der Anmeldung: 18.06.2025
(73) Patentinhaber: Häfele Berlin GmbH & Co KG, 12307 Berlin (DE)
(72) Erfinder: MERZ, Ulrich, 93059 Regensburg (DE)
(74) Vertreter: Kohler Schmid Möbus Patentanwälte
(86) Internationale Anmeldenummer: PCT/EP2023/071493
(87) Internationale Veröffentlichungsnummer: WO 2024/033199

(56) Entgegenhaltungen:
- DE-A1- 2 610 200
- DE-A1- 2 625 182

## Beschreibung

Die Erfindung betrifft einen Verbindungsbeschlag zur Verbindung zweier Komponenten, insbesondere Möbelplatten wie z.B. Konstruktionsböden in Schränken, Regalen und dergleichen, gemäß Oberbegriff von Anspruch 1 sowie eine zugehörige Anordnung mit zwei miteinander verbundenen Komponenten.

Ein solcher Verbindungsbeschlag ist beispielsweise aus der DE 26 10 200 A1 bekannt.

Üblicherweise besteht ein Verbindungsbeschlag aus zwei Beschlagteilen, von denen einer an der zu verbindenden Komponente befestigt wird und von der Komponente absteht. Dieses abstehende Beschlagteil kann beim weiteren Handling von der Komponente abbrechen und verhindert daher die Lagerung und Auslieferung von Komponenten mit vormontierten Beschlagteilen.

Konstruktionsböden sind Zwischenböden in Schrank- und Korpusmöbeln, welche im Gegensatz zu Tablarböden die Aufgabe übernehmen, das Möbel konstruktiv zu unterstützen, indem sie fest mit den Seitenwänden montiert sind. Dies ist insbesondere bei höheren Schränken oder Regalen von Vorteil, da ein Ausbauchen der Seiten verhindert wird. Für die Befestigung von Konstruktionsböden gibt es eine Reihe von bekannten Systemen, welche entweder eine angeschnittene Flächenbohrung benötigen oder in eine Kantenbohrung bzw. Fräsung eingesetzt werden. Mit der Erfindung sollen Probleme, die sich bei der Montage von Konstruktionsböden ergeben, behoben werden. Diese sind zum einen die Sichtbarkeit der Verbindungsbeschläge im Falle einer Flächenbohrungsmontage, zum anderen die Notwendigkeit, Einschraubbolzen und dergleichen in die Seiten einzuschrauben.

Der aus der eingangs genannten DE 26 10 200 A1 bekannte Beschlag dient zum lösbaren Verbinden von plattenförmigen Bauteilen und umfasst ein in dem einen Bauteil drehbar eingelassenes Verriegelungselement und ein in dem anderen Bauteil verankerbares Verbindungsglied, welches zum Verspannen der Bauteile mit einer ersten Exzenterfläche des Verriegelungselementes zusammenwirkt. Das Verbindungsglied weist ein bolzen- bzw. zapfenförmiges Element auf, welches zur Verankerung des Verbindungsgliedes in dem anderen Bauteil durch die erste Exzenterfläche relativ zum Verriegelungselement bei dessen Drehen verschiebbar ist. Das Verbindungsglied ist von einem Spreizdübel gebildet, in dessen Längsbohrung ein Spreizstift untergebracht ist, welcher durch die erste Exzenterfläche relativ zum Spreizdübel verschiebbar ist. Das Verriegelungselement hat eine weitere Exzenterfläche, welche mit einem Abschnitt verminderten Querschnitts oder mit einer Umfangsnut des Spreizdübels zusammenwirkt.

Demgegenüber ist es die Aufgabe der vorliegenden Erfindung, einen neuartigen Verbindungsbeschlag anzugeben, der insbesondere die Lagerung, Auslieferung und Montage von Komponenten, insbesondere von Konstruktionsböden, mit vormontierten Beschlagteilen ermöglicht und zudem möglichst nicht sichtbar ist.

Diese Aufgabe wird erfindungsgemäß durch einen Verbindungsbeschlag zur Verbindung zweier Komponenten, insbesondere Möbelplatten, gelöst, aufweisend:
- ein Gehäuse mit einer Gehäusevorderseite,
- einen im Gehäuse zwischen einer hinteren und einer vorderen Schieberendstellung längsverschiebbaren Schieber, dessen vorderes Schieberende als aufspreizbare Muffe ausgebildet ist, welche in der vorderen Schieberendstellung über die Gehäusevorderseite vorsteht,
- einen im Schieber längsverschiebbar angeordneten Bolzen, der an seinem einen, vorderen Bolzenende einen verbreiterten Spreizkopf zum Aufspreizen der Muffe und an seinem anderen, hinteren Bolzenende einen dem Spreizkopf zugewandten Hinterschnitt aufweist, und
- ein im Gehäuse drehbar um eine schräg, insbesondere rechtwinklig, zur Bolzenachse verlaufende Drehachse gelagertes Steuerelement, das aus einer Ausgangsstellung in einer Montagedrehrichtung in eine Montagestellung verdrehbar ist, mit einem (z.B. in Axialrichtung der Drehachse offenen) Führungsschlitz, dessen Abstand zur Drehachse, gesehen in Montagedrehrichtung, zunimmt, mit einer radial nach innen weisenden Anzugskontur, deren Abstand zur Drehachse, gesehen in Montagedrehrichtung, zunimmt, und mit einer radial nach außen weisenden Sperrkontur, die sich teilkreisförmig um die Drehachse erstreckt,
wobei beim Drehen des Steuerelements aus der Ausgangsstellung in Montagedrehrichtung auf einem ersten Drehabschnitt der Schieber mittels eines im Führungsschlitz geführten Zapfens vom Steuerelement bis in die vordere Schieberendstellung geschoben wird und auf einem zweiten Drehabschnitt der Schieber von der Sperrkontur in der vorderen Schieberendstellung verriegelt ist und der Bolzen von der den Hinterschnitt hintergreifenden Anzugskontur radial nach innen gezogen wird, bis spätestens in der Endstellung die Muffe durch den Spreizkopf aufgespreizt ist.

Erfindungsgemäß wird durch Drehen des Steuerelements der Schieber samt Bolzen nach vorne ausgefahren. Durch Weiterdrehen des Steuerelements wird der Schieber in seiner vorderen Schieberendstellung festgestellt und der Bolzen gegenüber dem festgestellten Schieber radial nach innen bzw. nach hinten angezogen, wodurch die Muffe vom Bolzen aufgespreizt wird. Insgesamt wird somit ein unsichtbarer Verbinder bereitgestellt. Der Führungsschlitz kann beispielsweise als eine einseitig offene Kulissenführung für den Zapfen des Schiebers ausgeführt sein.

Vorzugsweise ist der Führungsschlitz an seinem in Montagedrehrichtung weisenden Schlitzende und/oder an seinem entgegen der Montagedrehrichtung weisenden Schlitzende endseitig offen. Im ersteren Fall kann in der vorderen Schieberendstellung der Zapfen aus dem Führungsschlitz ausgetreten und damit vom Steuerelement entkoppelt sein. Bevorzugt verbreitert sich, gesehen in Montagedrehrichtung, das in Montagedrehrichtung weisende Schlitzende, so dass in der Ausgangsstellung der Zapfen etwas zurückfedern und die ggf. etwas vorstehende Muffe zurückfahren kann, bis sie bündig mit der Gehäusevorderseite abschließt.

In bevorzugten Ausführungsformen der Erfindung ist vorgesehen, dass der Spreizkopf in Richtung auf sein anderes Ende konisch zuläuft und der Bolzen an seinem hinteren Bolzenende einen beliebig geformten Bolzenkopf aufweist, an dem der Hinterschnitt ausgebildet ist. Der Bolzen kann beispielsweise einen Bolzenschaft mit rundem, ovalem oder polygonem, insbesondere rechteckigem oder quadratischem Querschnitt aufweisen, um im Fall einer längsgeschlitzten Muffe im Längsschlitz längsverschiebbar, aber unverdrehbar geführt zu sein.

Vorzugsweise steht die Muffe in der Grundstellung des Verbindungsbeschlags über die Gehäusevorderseite vor und ist aus der Grundstellung gegen die Wirkung mindestens einer gehäuseseitig abgestützten Rückstellfeder bis in eine zur Gehäusevorderseite bündige Stellung zurückschiebbar.

Besonders bevorzugt liegt auf dem zweiten Drehabschnitt die Sperrkontur an einer Muffenrückseite der Muffe an, um so den Schieber in seiner vorderen Schieberendstellung festzustellen.

Vorzugsweise weist das Steuerelement einen Lagerzapfen mit einer zur Drehachse koaxialen Betätigungskontur, wie z.B. einem Innensechskant, zum Verdrehen des Steuerelements auf. Vorteilhaft kann das Gehäuse eine Zugangsöffnung für die Betätigungskontur aufweisen, um das Steuerelement von außen mittels eines Werkzeugs drehen zu können.

Besonders bevorzugt weist das Steuerelement einen sich in Montagedrehrichtung erstreckenden Arm auf, dessen Innenseite die Anzugskontur und dessen Außenseite die Sperrkontur ausbildet. Der Arm kann beispielsweise einarmig oder gabelförmig ausgebildet sein, um auf dem zweiten Drehabschnitt den Hinterschnitt zu beiden Seiten des Bolzenschafts zu hintergreifen.

Vorzugsweise weist das Steuerelement einen in Richtung auf die Anzugskontur vorstehenden Demontagevorsprung auf, der beim Drehen des Steuerelements aus der Endstellung entgegen der Montagedrehrichtung den Bolzen radial nach außen schiebt, um die Muffe nicht mehr durch den Spreizkopf aufzuspreizen.

Das Gehäuse kann einteilig, insbesondere mittels eines Filmscharniers faltbar, oder aus zwei Gehäusehälften zusammengesetzt sein und mindestens eine, insbesondere mehrere Umfangsrippen aufweisen, die sich in die Wandung einer Aussparung (z.B. Einfach- oder Mehrfach-Bohrung oder Fräsung) eingraben können.

Die Erfindung betrifft auch eine Anordnung mit zwei Komponenten, insbesondere Möbelplatten, die mittels eines wie oben ausgebildeten Verbindungsbeschlags miteinander verbunden sind, wobei das Gehäuse in einer Aussparung (z.B. Einfach- oder Mehrfach-Bohrung oder Fräsung) der einen Komponente und die Muffe in einer Bohrung der anderen Komponente verankert sind. Durch eine gegenläufige Drehbewegung des Steuerelements können die beiden Komponenten demontiert werden.

Weitere Vorteile der Erfindung ergeben sich aus der Beschreibung, den Ansprüchen und der Zeichnung. Ebenso können die vorstehenden genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fign. 1a-1c: einen erfindungsgemäßen Verbindungsbeschlag zur Verbindung zweier Komponenten in einer perspektivischen Ansicht (Fig. 1a) und in zwei unterschiedlichen Explosionsansichten (Fign. 1b, 1c), wobei jeweils nur eine der beiden Gehäusehälfte gezeigt ist;
- Fig. 2: ein in Fig. 1 gezeigte Steuerelement;
- Fign. 3a-3f: die Funktionsweise des erfindungsgemäßen Verbindungsbeschlags;
- Fig. 4: den erfindungsgemäßen Verbindungsbeschlag in einer perspektivischen Ansicht;
- Fign. 5a, 5b: zwei Varianten eines in Fig. 1 gezeigten Bolzens; und
- Fig. 6: eine Variante eines in Fig. 1 gezeigten Steuerelements.

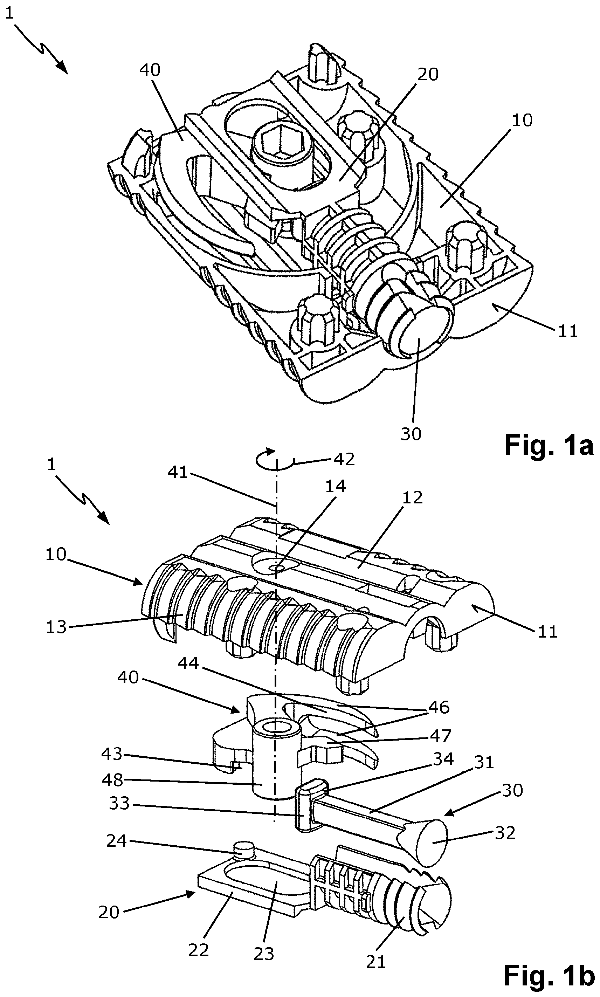

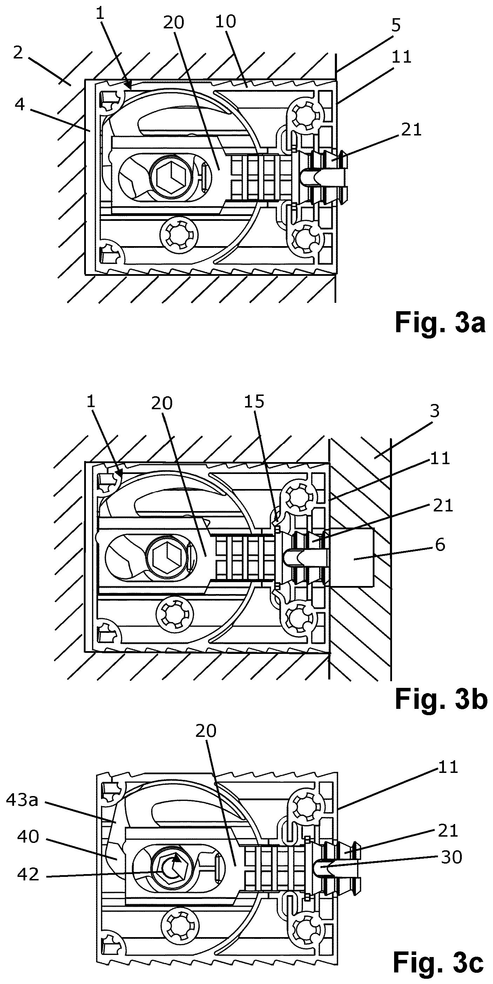

Der in **Fign. 1a-1c** gezeigte Verbindungsbeschlag **1** dient zur Verbindung zweier Komponenten **2, 3** (Fig. 3a), hier lediglich bespielhaft in Form zweier Möbelplatten, und umfasst folgende Einzelteile auf:
- ein Gehäuse **10** mit einer Gehäusevorderseite **11,**
- einen Schieber **20,** der im Gehäuse 10 zwischen einer eingefahrenen, hinteren und einer ausgefahrenen, vorderen Schieberendstellung längsverschiebbar angeordnet ist,
- einen Bolzen **30,** der im Schieber 20 längsverschiebbar angeordnet ist, und
- ein Steuerelement **40,** das im Gehäuse 10 drehbar um eine Drehachse **41** zwischen einer Ausgangs- und einer Endstellung gelagert ist.

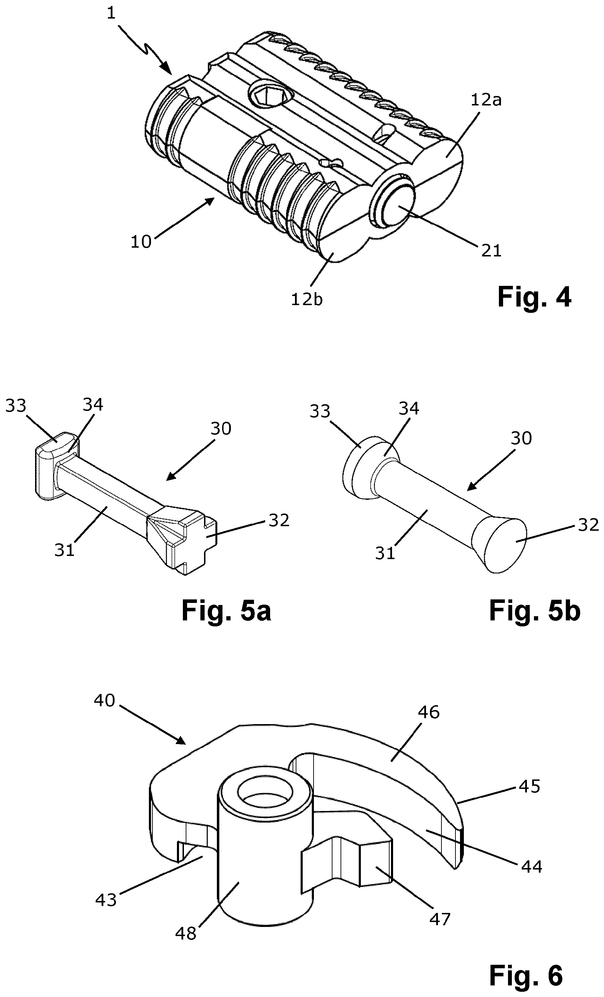

Wie gezeigt, ist das Gehäuse 10 vorzugsweise aus zwei Gehäusehälften **12a, 12b** (Fig. 4) zusammengesetzt, von denen in Fign. 1a-1c jeweils nur die eine Gehäusehälfte 12a gezeigt ist. Das Gehäuse 10 hat außerdem vorzugsweise eine oder mehrere Umfangsrippen **13.**

Das vordere Schieberende ist als aufspreizbare, hier längsgeschlitzte Muffe **21** ausgebildet, welche in der vorderen Schieberendstellung weiter über die Gehäusevorderseite 11 vorsteht als in der hinteren Schieberendstellung. Das hintere Schieberende ist vorzugsweise durch eine Platte **22** gebildet, die ein sich in Schieberlängsrichtung erstreckendes Langloch (oder Aussparung) **23** und an einer ihrer beiden Hauptseiten einen (Mitnehmer)Zapfen **24** aufweist. Die Muffenrückseite ist mit **25** bezeichnet.

Der Bolzen 30 hat einen Bolzenschaft **31** mit vorzugsweise quadratischem Querschnitt, der in der Muffe 21 längsverschiebbar angeordnet ist, und weist an seinem vorderen Bolzenende einen gegenüber dem Bolzenschaft 31 verbreiterten Spreizkopf **32** zum Aufspreizen der Muffe 21 und an seinem hinteren Bolzenende einen gegenüber dem Bolzenschaft 31 verbreiterten, hinteren Bolzenkopf **33** auf, der einen dem Spreizkopf 32 zugewandten Hinterschnitt **34** aufweist. Der Spreizkopf 32 läuft in Richtung auf den hinteren Bolzenkopf 33 vorzugsweise konisch zu.

Das Steuerelement 40 ist im Gehäuse 10 drehbar um eine schräg, hier rechtwinklig, zur Bolzenachse verlaufende Drehachse **41** gelagert und aus einer Ausgangsstellung in einer Montagedrehrichtung **42** in eine Endstellung verdrehbar. Das Steuerelement 40 weist einen in Axialrichtung der Drehachse 41 offenen Führungsschlitz **43** auf, dessen Abstand zur Drehachse 41, gesehen in Montagedrehrichtung 42, zunimmt, eine radial nach innen weisende Anzugskontur **44,** deren Abstand zur Drehachse 41, gesehen in Montagedrehrichtung 42, zunimmt, und eine radial nach außen weisende Sperrkontur **45,** die der Anzugskontur 44 radial außen vorgelagert ist und sich teilkreisförmig um die Drehachse 41 erstreckt.

Der Führungsschlitz 43 ist an seinen beiden in und entgegen der Montagedrehrichtung 42 weisenden Schlitzenden 43a, 43b jeweils vorzugsweise endseitig offen. Das in Montagedrehrichtung 42 weisende Schlitzende 43a ist zusätzlich verbreitert.

Die Anzugskontur 44 und die Sperrkontur 45 sind durch die Innenseite und die Außenseite eines Arms **46** des Steuerelements 40 gebildet, der sich in Montagedrehrichtung 42 erstreckt. Der Arm 46 kann, wie im Ausführungsbeispiel gezeigt, gabelförmig ausgebildet sein.

Das Steuerelement 40 hat außerdem einen der Anzugskontur 44 radial innen vorgelagerten, in Richtung auf die Anzugskontur 44 vorstehenden Demontagevorsprung **47** sowie einen zur Drehachse 41 koaxialen, hier kreisrunden Lagerzapfen **48,** der durch das Langloch 23 des Schiebers 20 greift und eine zur Drehachse 41 koaxiale Betätigungskontur **49,** hier in Form einer Sechskantöffnung, zum Verdrehen des Steuerelements 40 aufweist. Das Gehäuse 10 hat eine entsprechende Zugangsöffnung **14** für die Betätigungskontur 49. Optional kann der Schieber 20 mittels seines Langlochs 23 auch auf dem Lagerzapfen 48 längsverschiebbar geführt sein.

Nachfolgend wird die Funktionsweise des Verbindungsbeschlags 1 beschrieben, wobei beim Drehen des Steuerelements 40 aus der Ausgangsstellung in Montagedrehrichtung 42 auf einem ersten Drehabschnitt α1 (0° ≤ α1 ≤ ca. 45°) der Schieber 20 mittels des im Führungsschlitz 43 geführten Zapfens 24 vom Steuerelement 40 bis in die vordere Schieberendstellung geschoben wird und auf einem zweiten Drehabschnitt α2 (ca. 45° ≤ α2 ≤ ca. 90°) die Muffe 21 durch den Spreizkopf 32 aufgespreizt wird. In anderen Ausführungsformen der Erfindung können die beiden Drehabschnitte α1, α2 auch jeweils größer oder kleiner gewählt werden; insbesondere kann die Obergrenze für den zweiten Drehabschnitt α2 bis zu ca. 120° betragen.

**Fig. 3a** zeigt den Verbindungsbeschlag 1 in seiner Grundstellung, in welcher sich der Schieber 20 in der vorderen Schieberstellung befindet und die Muffe 21 etwas über die Gehäusevorderseite 11 vorsteht. Der Verbindungsbeschlag 1 ist mit seinem Gehäuse 10 bündig in einer, hier als 3-fach Bohrung ausgebildeten Aussparung 4 der ersten Komponente 2 mittels der Umfangsrippen 13 verankert, so dass die Muffe 21 etwas über die Kante **5** der ersten Komponente 2 vorsteht. Alternativ kann die Muffe 21 in der Grundstellung des Verbindungsbeschlags 1 aber auch bündig mit der Gehäusevorderseite 11, wie in Fig. 3b gezeigt, und somit auch bündig mit der Kante 5 abschließen. Die Zugangsöffnung 14 bzw. die Betätigungskontur 49 sind über eine Querbohrung der ersten Komponente 3 zugänglich, so dass das Steuerelement 40 von außen mittels eines Werkzeugs gedreht werden kann.

In **Fig. 3b** ist die erste Komponente 2 mit ihrer Kante 5 auf die zweite Komponente 3 aufgesetzt. Das verbreiterte Schlitzende 43a erlaubt dem Zapfen 24 gegen die Wirkung von Rückstellfedern **15** zurück zu federn, so dass die Muffe 21 zurückfahren kann, bis sie bündig mit der Gehäusevorderseite 11 und somit auch mit der Kante 5 abschließt. Die Rückstellfedern 15 sind hier am Gehäuse 10 angespritzt, könnten aber alternativ auch an der Muffe 21 angespritzt sein.

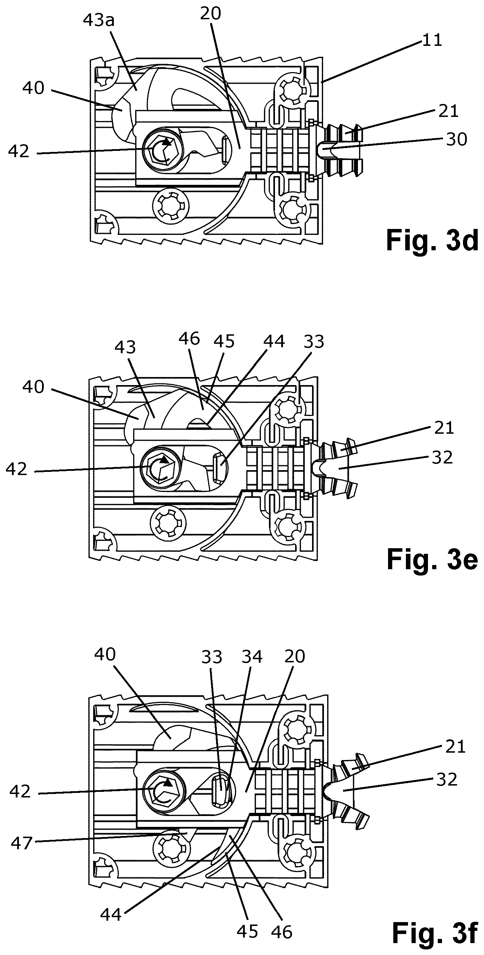

Beim Drehen des Steuerelements 40 aus der Ausgangsstellung in Montagedrehrichtung 42 wird auf dem ersten Drehabschnitt ("Vormontage") der Schieber 20 mittels des im Führungsschlitz 43 geführten Zapfens 24 vom Steuerelement 40 nach vorne ausgefahren. In **Fig. 3c** ist das Steuerelement 40 aus der Ausgangsstellung um ca. 15° in Montagedrehrichtung 42 verdreht und dadurch der Schieber 20 samt Bolzen 30 in eine Zwischenstellung ausgefahren, in der die Muffe 21 über die Gehäusevorderseite 11 vorsteht und in eine Bohrung 6 der zweiten Komponente 3 eingreift. In **Fig. 3d** ist das Steuerelement 40 aus der Ausgangsstellung um ca. 45° in Montagedrehrichtung 42 verdreht und dadurch der Schieber 20 samt Bolzen 30 in die vordere Schieberendstellung ausgefahren, in der die Muffe 21, jeweils maximal weit, über die Gehäusevorderseite 11 vorsteht und in die Bohrung 6 eingreift. In der vorderen Schieberendstellung ist der Zapfen 24 aus dem Schlitzende 43b ausgetreten und damit vom Steuerelement 40 entkoppelt.

Auf dem zweiten Drehabschnitt ("Arretierung") wird einerseits der Schieber 20 von der Sperrkontur 45 des Steuerelements 40 in der vorderen Schieberendstellung verriegelt, indem die Sperrkontur 45 an einer Muffenrückseite 25 anliegt, und andererseits der Bolzen 30 von der den Hinterschnitt 34 hintergreifenden Anzugskontur 44 radial nach innen gezogen, bis spätestens in der Endstellung die Muffe 21 durch den Spreizkopf 32 aufgespreizt ist. Aufgrund seiner gabelförmigen Ausbildung hintergreift der Arm 46 den Hinterschnitt 34 zu beiden Seiten des Bolzenschafts 31.

In **Fig. 3e** ist das Steuerelement 40 aus der Ausgangsstellung um ca. 60° in Montagedrehrichtung 42 verdreht und die Muffe 21 durch den Spreizkopf 32 bereits aufgespreizt und in der Bohrung 6 verankert. In **Fig. 3f** ist das Steuerelement 40 aus der Ausgangsstellung um ca. 90° in Montagedrehrichtung 42 in die Endstellung verdreht und die Muffe 21 durch den Spreizkopf 32 vollständig aufgespreizt und in der Bohrung 6 fest verankert.

Beim Drehen des Steuerelements 40 aus der Endstellung entgegen der Montagedrehrichtung 42 kommt der Demontagevorsprung 47 in Anlage an den hinteren Bolzenkopf 33 und schiebt den Bolzen 30 auf dem zweiten Drehabschnitt α2 radial nach außen, wodurch die Muffe 21 nicht mehr durch den Spreizkopf 32 aufgespreizt wird. Auf dem ersten Drehabschnitt α1 kann der Schieber 20 wieder in die hintere Schieberendstellung zurückgefahren werden.

**Fig. 4** zeigt den in seiner Grundstellung befindlichen Verbindungsbeschlag 1 mit dem aus zwei Gehäusehälften 12a, 12b zusammengesetzten Gehäuse 10. Alternativ kann das Gehäuse auch einteilig, insbesondere mittels eines Filmscharniers faltbar, ausgebildet sein.

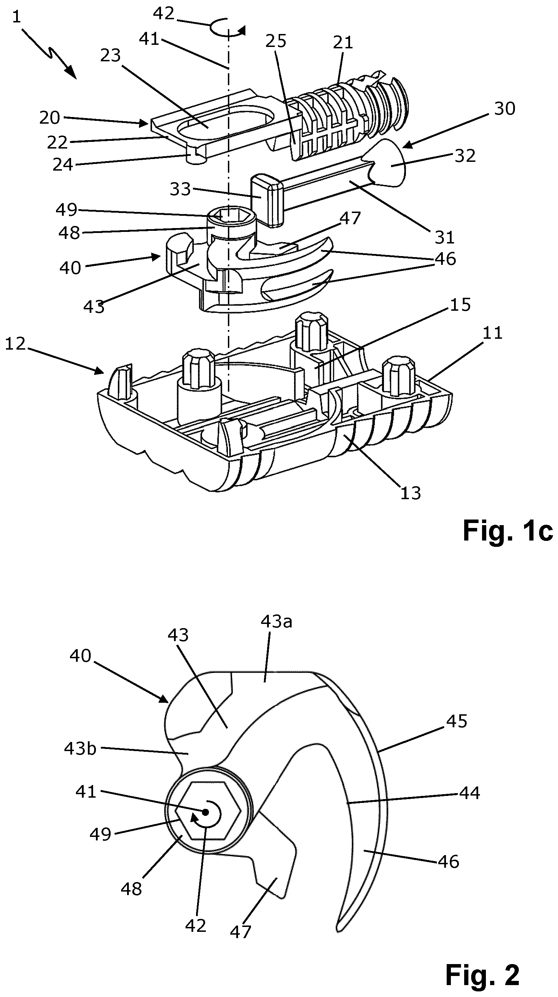

Von dem in Fig. 1 gezeigten Bolzen 30 unterscheiden sich die beiden in **Fign. 5a, 5b** gezeigten Bolzenvarianten dadurch, dass in Fig. 5a der Spreizkopf 32 im Querschnitt kreuzförmig und in Fig. 5b der Bolzenschaft und der hintere Bolzenkopf 33 rund ausgebildet sind.

Von dem in Fig. 1 gezeigten Steuerelement 40 unterscheidet sich die in **Fig. 6** gezeigte Variante lediglich dadurch, dass hier das Steuerelement 40 nur einen einarmigen Arm 46 aufweist.

## Patentansprüche

1. Verbindungsbeschlag (1) zur Verbindung zweier Komponenten (2, 3), insbesondere Möbelplatten, aufweisend:
- ein Gehäuse (10) mit einer Gehäusevorderseite (11),
- einen im Gehäuse (10) zwischen einer hinteren und einer vorderen Schieberendstellung längsverschiebbaren Schieber (20), dessen vorderes Schieberende als aufspreizbare Muffe (21) ausgebildet ist, welche in der vorderen Schieberendstellung über die Gehäusevorderseite (11) vorsteht,
- einen im Schieber (20) längsverschiebbar angeordneten Bolzen (30), der an seinem einen, vorderen Bolzenende einen verbreiterten Spreizkopf (32) zum Aufspreizen der Muffe (21) und an seinem anderen, hinteren Bolzenende einen dem Spreizkopf (32) zugewandten Hinterschnitt (34) aufweist, und
- ein im Gehäuse (10) drehbar um eine schräg, insbesondere rechtwinklig, zur Bolzenachse verlaufende Drehachse (41) gelagertes Steuerelement (40), das aus einer Ausgangsstellung in einer Montagedrehrichtung (42) in eine Endstellung verdrehbar ist, mit einem Führungsschlitz (43), dessen Abstand zur Drehachse (41), gesehen in Montagedrehrichtung (42), zunimmt, mit einer radial nach innen weisenden Anzugskontur (44), deren Abstand zur Drehachse (41), gesehen in Montagedrehrichtung (43), zunimmt, und mit einer radial nach außen weisenden Sperrkontur (45), die sich teilkreisförmig um die Drehachse (41) erstreckt,
**dadurch gekennzeichnet,**
**dass** beim Drehen des Steuerelements (40) aus der Ausgangsstellung in Montagedrehrichtung (42) auf einem ersten Drehabschnitt der Schieber (20) mittels eines im Führungsschlitz (43) geführten Zapfens (24) vom Steuerelement (40) bis in die vordere Schieberendstellung geschoben wird und auf einem zweiten Drehabschnitt der Schieber (20) von der Sperrkontur (45) in der vorderen Schieberendstellung verriegelt ist und der Bolzen (30) von der den Hinterschnitt (34) hintergreifenden Anzugskontur (44) radial nach innen gezogen wird, bis spätestens in der Endstellung die Muffe (21) durch den Spreizkopf (32) aufgespreizt ist.

2. Verbindungsbeschlag nach Anspruch 1, **dadurch gekennzeichnet, dass** der Führungsschlitz (43) an seinem in Montagedrehrichtung (42) weisenden Schlitzende (43a) und/oder an seinem entgegen der Montagedrehrichtung (42) weisenden Schlitzende (43b) endseitig offen ist.

3. Verbindungsbeschlag nach Anspruch 1 oder 2, **dadurch gekennzeichnet, dass** das in Montagedrehrichtung (42) weisende Schlitzende (43a), gesehen in Montagedrehrichtung (42), verbreitert ist.

4. Verbindungsbeschlag nach einem der vorhergehenden Ansprüche, **dadurch gekennzeichnet, dass** der Spreizkopf (32) in Richtung auf das hintere Bolzenende konisch zuläuft.

5. Verbindungsbeschlag nach einem der vorhergehenden Ansprüche, **dadurch gekennzeichnet, dass** der Bolzen (30) an seinem hinteren Bolzenende einen hinteren Bolzenkopf (33) aufweist, an dem der Hinterschnitt (34) ausgebildet ist.

6. Verbindungsbeschlag nach einem der vorhergehenden Ansprüche, **dadurch gekennzeichnet, dass** die Muffe (21) in einer Grundstellung des Verbindungsbeschlags (1) über die Gehäusevorderseite (11) vorsteht und aus der Grundstellung gegen die Wirkung mindestens einer gehäuseseitig abgestützten Rückstellfeder (15) bis in eine zur Gehäusevorderseite (11) bündige Stellung zurückschiebbar ist.

7. Verbindungsbeschlag nach einem der vorhergehenden Ansprüche, **dadurch gekennzeichnet, dass** auf dem zweiten Drehabschnitt die Sperrkontur (45) an einer Muffenrückseite (25) der Muffe (21) anliegt.

8. Verbindungsbeschlag nach einem der vorhergehenden Ansprüche, **dadurch gekennzeichnet, dass** das Steuerelement (40) einen Lagerzapfen (48) mit einer zur Drehachse (41) koaxialen Betätigungskontur (49) zum Verdrehen des Steuerelements (40) aufweist.

9. Verbindungsbeschlag nach Anspruch 8, **dadurch gekennzeichnet, dass** das Gehäuse (10) eine Zugangsöffnung (14) für die Betätigungskontur (49) aufweist.

10. Verbindungsbeschlag nach einem der vorhergehenden Ansprüche, **dadurch gekennzeichnet, dass** das Steuerelement (40) einen sich in Montagedrehrichtung (42) erstreckenden Arm (46) aufweist, dessen Innenseite die Anzugskontur (45) und dessen Außenseite die Sperrkontur (46) ausbildet.

11. Verbindungsbeschlag nach Anspruch 10, **dadurch gekennzeichnet, dass** der Arm (46) gabelförmig ausgebildet ist, um auf dem zweiten Drehabschnitt den Hinterschnitt (34) zu beiden Seiten eines Bolzenschafts (31) zu hintergreifen.

12. Verbindungsbeschlag nach einem der vorhergehenden Ansprüche, **dadurch gekennzeichnet, dass** das Steuerelement (40) einen in Richtung auf die Anzugskontur (44) vorstehenden Demontagevorsprung (47) aufweist, der beim Drehen des Steuerelements (40) aus der Endstellung entgegen der Montagedrehrichtung den Bolzen (30) radial nach außen schiebt, um die Muffe (21) nicht mehr durch den Spreizkopf (32) aufzuspreizen.

13. Verbindungsbeschlag nach einem der vorhergehenden Ansprüche, **dadurch gekennzeichnet, dass** das Gehäuse (10) aus zwei Gehäusehälften (12a, 12b) zusammengesetzt ist.

14. Verbindungsbeschlag nach einem der vorhergehenden Ansprüche, **dadurch gekennzeichnet, dass** das Gehäuse (10) mindestens eine, insbesondere mehrere Umfangsrippen (13) aufweist.

15. Anordnung mit zwei Komponenten (2, 3), insbesondere Möbelplatten, die mittels eines Verbindungsbeschlags (1) nach einem der vorhergehenden Ansprüche miteinander verbunden sind, wobei das Gehäuse (10) in einer Aussparung (4) der einen Komponente (2) und die Muffe (21) in einer Bohrung (6) der anderen Komponente (3) verankert sind.

## Claims

1. A connection fitting (1) for connecting two components (2, 3), in particular furniture panels, comprising:
- a housing (10) having a housing front side (11),
- a slide (20), which is longitudinally movable in the housing (10) between a rear and a front slide end position, the front slide end of said slide being formed as a bushing (21) which can be spread apart and which in the front slide end position protrudes beyond the housing front side (11),
- a bolt (30), which is arranged longitudinally movably in the slide (20) and which, at one, front bolt end thereof, has a widened spreading head (32) for spreading the bushing (21) apart and which, at the other, rear bolt end thereof, has an undercut (34) facing toward the spreading head (32), and
- a control element (40), which is mounted in the housing (10) so as to be rotatable about an axis of rotation (41) extending obliquely, in particular at right angles, with respect to the bolt axis and which is rotatable in an installation direction of rotation (42) from an initial position into an end position, the control element having a guide slot (43), the distance of which from the axis of rotation (41) increases as viewed in the installation direction of rotation (42), having a radially inwardly facing tightening contour (44), the distance of which from the axis of rotation (41) increases as viewed in the installation direction of rotation (43), and having a radially outwardly facing blocking contour (45), which extends over a circular segment about the axis of rotation (41),
**characterized in that**,
when the control element (40) is rotated in the installation direction of rotation (42) out of the initial position, in a first portion of the rotation, the control element (40) pushes the slide (20), by means of a stud (24) guided in the guide slot (43), into the front slide end position, and, in a second portion of the rotation, the slide (20) is locked in the front slide end position by the blocking contour (45) and the bolt (30) is pulled radially inward by the tightening contour (44) engaging behind the undercut (34), until, at the latest in the end position, the bushing (21) has been spread apart by the spreading head (32).

2. The connection fitting as claimed in claim 1, **characterized in that** the end of the guide slot (43) is open at the slot end (43a) facing in the installation direction of rotation (42) and/or at the slot end (43b) facing counter to the installation direction of rotation (42).

3. The connection fitting as claimed in claim 1 or 2, **characterized in that** the slot end (43a) facing in the installation direction of rotation (42) is widened as viewed in the installation direction of rotation (42).

4. The connection fitting as claimed in one of the preceding claims,
**characterized in that** the spreading head (32) tapers conically in a direction toward the rear bolt end.

5. The connection fitting as claimed in one of the preceding claims,
**characterized in that** the bolt (30) has at its rear bolt end a rear bolt head (33), on which the undercut (34) is formed.

6. The connection fitting as claimed in one of the preceding claims,
**characterized in that** the bushing (21) protrudes beyond the housing front side (11) in a normal position of the connection fitting (1) and can be pushed back out of the normal position, counter to the action of at least one return spring (15) supported on the housing, as far as a position flush with the housing front side (11).

7. The connection fitting as claimed in one of the preceding claims,
**characterized in that**, in the second portion of the rotation, the blocking contour (45) rests against a bushing rear side (25) of the bushing (21).

8. The connection fitting as claimed in one of the preceding claims,
**characterized in that** the control element (40) has a bearing journal (48) with an actuating contour (49), coaxial with the axis of rotation (41), for rotating the control element (40).

9. The connection fitting as claimed in claim 8, **characterized in that** the housing (10) has an access opening (14) for the actuating contour (49).

10. The connection fitting as claimed in one of the preceding claims,
**characterized in that** the control element (40) has an arm (46) which extends in the installation direction of rotation (42), the inner side of which forms the tightening contour (45) and the outer side of which forms the blocking contour (46).

11. The connection fitting as claimed in claim 10, **characterized in that** the arm (46) is of forked design in order to engage behind the undercut (34) on both sides of a bolt stem (31) in the second portion of the rotation.

12. The connection fitting as claimed in one of the preceding claims,
**characterized in that** the control element (40) has a removal projection (47), which projects in a direction toward the tightening contour (44) and which, when the control element (40) is rotated out of the end position counter to the installation direction of rotation, pushes the bolt (30) radially outward in order to discontinue the spreading apart of the bushing (21) by the spreading head (32).

13. The connection fitting as claimed in one of the preceding claims,
**characterized in that** the housing (10) is assembled from two housing halves (12a, 12b).

14. The connection fitting as claimed in one of the preceding claims,
**characterized in that** the housing (10) has at least one, in particular a plurality of, circumferential ribs (13).

15. An arrangement comprising two components (2, 3), in particular furniture panels, which are interconnected by means of a connection fitting (1) as claimed in one of the preceding claims, wherein the housing (10) is anchored in a recess (4) in one component (2), and the bushing (21) is anchored in a bore (6) in the other component (3).

## Revendications

1. Ferrure de liaison (1) pour relier deux composants (2, 3), en particulier des panneaux de meuble, comportant :
- un boîtier (10) avec une face avant du boîtier (11),
- un coulisseau (20) déplaçable longitudinalement dans le boîtier (10) entre une position extrême arrière et une position extrême avant du coulisseau, dont l'extrémité avant du coulisseau est formée comme un manchon (21) écartable, lequel, dans la position extrême avant du coulisseau, dépasse la face avant du boîtier (11),
- un boulon (30) disposé longitudinalement déplaçable dans le coulisseau (20), qui présente, à son extrémité avant du boulon, une tête d'expansion (32) élargie pour écarter le manchon (21) et, à son autre extrémité arrière du boulon, une contre-dépouille (34) orientée vers la tête d'expansion (32), et
- un élément de commande (40) monté rotatif dans le boîtier (10) autour d'un axe de rotation (41) s'étendant de manière oblique, en particulier perpendiculaire, à l'axe du boulon, lequel peut être tourné d'une position de départ dans un sens de rotation de montage (42) vers une position finale, avec une fente de guidage (43) dont la distance à l'axe de rotation (41), vue dans le sens de rotation de montage (42), augmente, avec un contour de traction (44) orienté radialement vers l'intérieur,dont la distance à l'axe de rotation (41), vue dans le sens de rotation de montage (43), augmente,et avec un contour de blocage (45) orienté radialement vers l'extérieur, qui s'étend en arc de cercle partiel autour de l'axe de rotation (41),
**caractérisé en ce que**, lors de la rotation de l'élément de commande (40) de la position de départ dans le sens de rotation de montage (42), dans une première section de rotation, le coulisseau (20) est poussé par l'élément de commande (40) jusqu'à la position extrême avant du coulisseau au moyen d'un tenon (24) guidé dans la fente de guidage (43), et, dans une deuxième section de rotation, le coulisseau (20) est verrouillé par le contour de blocage (45) dans la position extrême avant du coulisseau et le boulon (30) est tiré radialement vers l'intérieur par le contour de traction (44) qui engage par l'arrière la contre-dépouille (34), jusqu'à ce que, au plus tard dans la position finale, le manchon (21) soit écarté par la tête d'expansion (32).

2. Ferrure de liaison selon la revendication 1, **caractérisée en ce que** la fente de guidage (43) est ouverte à son extrémité de fente (43a) orientée dans le sens de rotation de montage (42) et/ou à son extrémité de fente (43b) orientée à l'opposé du sens de rotation de montage (42).

3. Ferrure de liaison selon la revendication 1 ou 2, **caractérisée en ce que** l'extrémité de fente (43a) orientée dans le sens de rotation de montage (42), vue dans le sens de rotation de montage (42), est élargie.

4. Ferrure de liaison selon l'une des revendications précédentes, **caractérisée en ce que** la tête d'expansion (32) converge de manière conique en direction de l'extrémité arrière du boulon.

5. Ferrure de liaison selon l'une des revendications précédentes, **caractérisée en ce que** le boulon (30) présente, à son extrémité arrière du boulon, une tête arrière du boulon (33) sur laquelle la contre-dépouille (34) est formée.

6. Ferrure de liaison selon l'une des revendications précédentes, **caractérisée en ce que** le manchon (21) dépasse la face avant du boîtier (11) dans une position de base de la ferrure de liaison (1) et peut être refoulé de la position de base, contre l'action d'au moins un ressort de rappel (15) supporté côté boîtier, jusqu'à une position affleurant la face avant du boîtier (11).

7. Ferrure de liaison selon l'une des revendications précédentes, **caractérisée en ce que**, dans la deuxième section de rotation, le contour de blocage (45) est en appui contre une face arrière du manchon (25) du manchon (21).

8. Ferrure de liaison selon l'une des revendications précédentes, **caractérisée en ce que** l'élément de commande (40) présente un pivot d'appui (48) avec un contour d'actionnement (49) coaxial à l'axe de rotation (41) pour faire tourner l'élément de commande (40).

9. Ferrure de liaison selon la revendication 8, **caractérisée en ce que** le boîtier (10) comporte une ouverture d'accès (14) pour le contour d'actionnement (49).

10. Ferrure de liaison selon l'une des revendications précédentes, **caractérisée en ce que** l'élément de commande (40) présente un bras (46) s'étendant dans le sens de rotation de montage (42), dont la face intérieure forme le contour de traction (45) et dont la face extérieure forme le contour de blocage (46).

11. Ferrure de liaison selon la revendication 10, **caractérisée en ce que** le bras (46) est formé en forme de fourche afin d'engager par l'arrière la contre-dépouille (34) de chaque côté d'une tige de boulon (31) dans la deuxième section de rotation.

12. Ferrure de liaison selon l'une des revendications précédentes, **caractérisée en ce que** l'élément de commande (40) présente une saillie de démontage (47) dépassant en direction du contour de traction (44), laquelle, lors de la rotation de l'élément de commande (40) de la position finale à l'encontre du sens de rotation de montage, pousse le boulon (30) radialement vers l'extérieur afin de ne plus écarter le manchon (21) par la tête d'expansion (32).

13. Ferrure de liaison selon l'une des revendications précédentes, **caractérisée en ce que** le boîtier (10) est assemblé à partir de deux moitiés de boîtier (12a, 12b).

14. Ferrure de liaison selon l'une des revendications précédentes, **caractérisée en ce que** le boîtier (10) comporte au moins une, en particulier plusieurs nervures périphériques (13).

15. Agencement avec deux composants (2, 3), en particulier des panneaux de meuble, qui sont reliés l'un à l'autre au moyen d'une ferrure de liaison (1) selon l'une des revendications précédentes, le boîtier (10) étant ancré dans un évidement (4) de l'un des composants (2) et le manchon (21) étant ancré dans un perçage (6) de l'autre composant (3).
